# EUROPÄISCHE PATENTSCHRIFT

(11) **EP 2 562 126 B1**
(45) Veröffentlichungstag und Bekanntmachung des Hinweises auf die Patenterteilung: **16.04.2014**
(21) Anmeldenummer: 12178419.3
(22) Anmeldetag: 30.07.2012
(51) Int. Cl.: B66F 17/00, B66F 9/075, G01B 11/00, G01B 11/06

(54) **Flurförderzeug mit Hubhöhenmessung**
Chariot de manutention avec mesure de la hauteur de levage
Industrial vehicle with lift height measurement

(30) Priorität: 23.08.2011 DE 102011110830; 18.04.2012 DE 102012103364
(43) Veröffentlichungstag der Anmeldung: 27.02.2013
(73) Patentinhaber: STILL GmbH, 22113 Hamburg (DE)
(72) Erfinder: Krüger-Basjmeleh, Tino, 25469 Halstenbek (DE); Viereck, Volker, 23898 Kühsen (DE)
(74) Vertreter: Geirhos, Johann

(56) Entgegenhaltungen:
- EP-A2- 1 886 966
- WO-A1-92/19526
- GB-A- 1 470 401
- GB-A- 2 459 349

## Beschreibung

Die Erfindung betrifft ein Flurförderzeug mit einem Hubhöhenmesssystem sowie ein Verfahren zu Höhenmessung bei einem solchen Flurförderzeug. Insbesondere betrifft die Erfindung ein Flurförderzeug mit einem Hubgerüst und einem an dem Hubgerüst höhenbeweglich angeordneten Lastaufnahmemittel, wobei das Hubgerüst ein Hubhöhenmesssystem aufweist, bestehend aus einem einen Lichtstrahl aussendenden Lichtemitter, einem Empfangselement, einem optischen Ausrichtelement, einem Zielelement sowie einer zwischen diesen angeordneten Messstrecke, deren Länge sich mit der Hubhöhe ändert.

Bei Flurförderzeugen mit einem Hubmast bzw. Hubgerüst, an dem eine Lastaufnahmevorrichtung, im häufigsten Fall eine Lastgabel, höhenbeweglich zum Transport der Last geführt ist, sind verschiedene Hubhöhenmesssysteme bekannt, mit denen erfasst werden kann, um welchen Wert die Lastaufnahmevorrichtung des Flurförderzeugs angehoben wurden. So werden z.B. Seilzugsensoren verwendet, mit denen die durch Anheben der Lastaufnahmevorrichtung von einer Seilrolle abgerollte Länge eines Seiles erfasst werden kann. Andere Systeme nutzen ein Seil, das senkrecht gespannt und um eine Messrolle geschlungen ist, so dass bei einem Anheben der Lastaufnahmevorrichtung diese Messrolle nach oben bewegt sowie durch die Seilumschlingung in Drehung versetzt wird. Durch Aufnehmen der Drehbewegung lässt sich auf die Höhe der Lastaufnahmevorrichtung schließen.

Problematisch an diesen Lösungen ist, dass die verwendeten Seile, oder auch alternativ Riemen, oft reißen, da sie mechanischem Verschleiß und durch die Wechselbeanspruchung einer Materialermüdung unterliegen, oder an Gegenständen, wie zum Beispiel Regalen, Lasten, etc., hängenbleiben können.

Erstrebenswert ist bei einer Hubhöhenmessung eine absolute Erfassung der Hubhöhe statt einer inkrementellen Messung, bei der eine relative Veränderung der Hubhöhe erfasst wird und die tatsächliche Gesamthubhöhe fortlaufend berechnet werden muss. Eine absolute Messung vermeidet sich aufaddierende Fehler bei dieser fortlaufenden Weiterbestimmung der aktuellen Hubhöhe.

Die Verwendung eines Laserdistanzsensors ist vor diesem Hintergrund attraktiv, da ein Laserdistanzsensor eine Höhenmessung absolut durchführt, sich durch seine geringe Baugröße gut in dem Bereich eines Hubgerüstes in ein Flurförderzeug integrieren lässt und zusätzlich keine Durchführung von Leitungen oder Seilen durch das Hubgerüst erfordert.

Die Verwendung eines Laserdistanzsensors für eine Messung, beispielsweise mit einem Lasersensor unten, der einen Laserstrahl nach oben auf ein Zielelement, beispielsweise ein geeignetes reflektierendes Ziel, richtet, führt jedoch zu Problemen, indem sich die Position des Ziels z.B. durch Aufnahme einer Last oder während Beschleunigungs- / Abbremsvorgängen des Flurförderzeugs bei Fahrbewegungen stark ändern kann, da damit eine Verbiegung des Hubgerüsts z. B. aus seiner senkrechten Achse heraus verbunden ist und das Ziel aus dem Strahlweg des Laserdistanzsensors in Richtung der Fahrzeuglängsachse oder quer zu der Fahrzeuglängsachse in Bezug auf die senkrechte Achse seitlich heraus wandert.

Bei Einsatz eines nach dem Stand der Technik bekannten Laserdistanzsensors ließe sich diesem Problem nur begegnen, wenn das Ziel in seiner horizontalen Fläche entsprechend groß dimensioniert würde. Dies lässt sich bei den begrenzten Platzverhältnissen in den Hubgerüsten bei Flurförderzeugen jedoch nicht realisieren.

Ein bei Hubhöhenmesssystemen von Flurförderzeugen zusätzlich auftretendes und zu berücksichtigendes Problem ist, dass durch den Verschleiß der Bereifung sich die Bodenfreiheit des Fahrzeuges mit der Zeit verringert und den Absolutwert der Hubhöhe verfälscht, der beispielsweise für das Vermeiden einer Kollision mit einem Regal sehr genau bestimmt werden muss. Insbesondere bei Superelastikreifen führt Verschleiß zu merklichen Veränderungen im Zentimeterbereich.

Aus der EP 1 886 966 A2 ist eine Vorrichtung zur berührungslosen Erfassung der Hubhöhe bekannt, bei der eine Sendevorrichtung ein wellenförmiges Signal, insbesondere eine elektromagnetische Welle, zu einer getrennt angeordneten Empfangsvorrichtung aussendet, wobei Sende- und Empfangsvorrichtung an in Relation zueinander bei Hubbewegungen des Hubgerüstes sich bewegenden Bauteilen angeordnet sind. Nachteilig an diesem Stand der Technik ist, dass sowohl die Empfangs-, als auch die Sendevorrichtung Signalleitungen und eine Stromversorgung benötigen und hierauf bei der Anordnung im Hubgerüst Rücksicht genommen werden muss.

Aus der DE 10 2008 020 170 A1 ist ein Verfahren zur Erfassung der Höhenposition eines höhenbeweglichen Lastaufnahmemittels eines Flurförderzeugs bekannt. Bei diesem wird ein Bild eines relativ zu einer Empfangseinrichtung beweglichen Zielobjekts von der Empfangseinrichtung erfasst und aus der Veränderung des Bildes wird die Position des Lastaufnahmemittels bestimmt.

Der vorliegenden Erfindung liegt die Aufgabe zugrunde, ein Flurförderzeug mit einer Hubhöhenmessung zur Verfügung zu stellen, die für den Einsatz eines Flurförderzeugs geeignet ist und sich mit wenig Aufwand in verschiedenste Hubgerüste integrieren lässt.

Diese Aufgabe wird durch ein Flurförderzeug mit den Merkmalen des Patentanspruchs 1 und ein Verfahren mit den Merkmalen des Anspruchs 21 gelöst. Vorteilhafte Weiterbildungen sind in den Unteransprüchen angegeben.

Die Aufgabe wird erfindungsgemäß dadurch gelöst, dass bei einem Flurförderzeug mit einem Hubgerüst und einem an dem Hubgerüst höhenbeweglich angeordneten Lastaufnahmemittel, wobei das Hubgerüst ein Hubhöhenmesssystem aufweist, bestehend aus einem einen Lichtstrahl aussendenden Lichtemitter, einem Empfangselement, einem optischen Ausrichtelement, einem Zielelement sowie einer zwischen diesen angeordneten Messstrecke, deren Länge sich mit der Hubhöhe ändert, wobei das Ausrichtelement und/oder der Lichtemitter eine strahlbildende Optik, insbesondere eine strahlaufweitende Optik, aufweisen, so dass bei maximaler Hubhöhe das Zielelement sich für alle Positionen zulässiger maximaler Verbiegung des Hubgerüstes innerhalb des aufgeweiteten Lichtstrahls des Lichtemitters befindet.

Dadurch wird vorteilhaft durch den Lichtstrahl der gesamte Bereich überdeckt, in dem sich das Zielelement, etwa in Form des Empfangselements oder eines Reflexionsziels, z.B. bei Durchbiegung oder Verdrehung des Hubgerüsts befinden kann. Insbesondere kann dabei auch bei großen Höhen eine genaue Messung der tatsächlichen Höhe erfolgen, da aus dem aufgeweiteten Lichtstrahl noch ein ausreichend großer Signalanteil durch das Zielelement erfasst wird und etwa im Fall einer Reflexionsfläche wieder zurück zu dem Empfangselement reflektiert wird. Die erfindungsgemäßen Merkmale ermöglichen somit den Einsatz von üblicherweise stark fokussiertes Licht aussendenden Lichtemittern, wie etwa Laserdistanzsensoren, auch bei Flurförderzeugen mit sehr großen Hubhöhen, wie Regal-Kommissionierstaplern, Schubmaststaplern und Gegengewichtsgabelstaplern mit hohen Hubgerüst. Das Zielelement bzw. Reflexionsziel kann in seiner größten Dimensionierung noch so gestaltet werden, dass es innerhalb des Hubgerüstes untergebracht werden kann. Lichtemitter mit stark fokussierendem Licht werden üblicherweise allein schon deshalb eingesetzt, um bei großen Hubhöhen überhaupt noch eine ausreichende Intensität eines im Zielelement ankommenden oder zurück gespiegelten Signals erreichen zu können. Insbesondere ist die erfindungsgemäße Lösung auch für Flurförderzeuge und Gegengewichtsgabelstapler geeignet, die eine robuste und zuverlässige Ausführung der Höhenmessung benötigen. Im Gegensatz zu Lösungen mit Seilen nach dem Stand der Technik kann es nicht zu mechanischem Verschleiß, einem Reißen des Seiles oder einem Funktionsausfall aufgrund von Witterungsverhältnissen, wie insbesondere Eisbildung kommen. Die erfindungsgemäße Gestaltung bietet ein robustes und zuverlässiges Sensorkonzept zur Erfassung der Hubhöhe von Flurförderzeugen. Durch die Messung mittel eines Lichtstrahls erfolgt auch stets eine Erfassung eines Absolutwertes für die Hubhöhe bezogen auf die Position des Lichtemitters bzw. Ausrichtelements bzw. des Reflexionsziels oder Zielelements. Dadurch werden Fehler wie bei einer inkrementellen Messung vermieden. Sowohl das Zielelement, insbesondere als Reflexionsziel, wie auch das Empfangselement und der Lichtemitter sind relativ kompakte Bauelemente und können leicht in viele verschiedene Hubgerüste integriert werden. Dies ermöglicht eine kostengünstige Umsetzung der Hubhöhenmessung und es können weitere Zusatzausstattungen für das Flurförderzeug vorgesehen werden, die eine Kenntnis der Hubhöhe voraussetzen. Der Lichtemitter und das Empfangselement können dabei alle bekannten Techniken zur Distanzmessung nutzen, wie beispielsweise eine Laufzeitmessung, eine Messung von Interferenzdurchgängen des Lichts selbst oder einer aufmodulierten Frequenz. Dabei kann die Messstrecke alle Längen des optischen Weges, aber auch nur Teilstücke zwischen Lichtemitter, Ausrichtelement, Zielelement und Empfangselement umfassen, die sich bei einer Änderung der Hubhöhe entsprechend ändern. Insbesondere kann durch das Ausrichtelement der optische Weg auf das Zielelement gelenkt werden und zwischen diesen sich ein Teil der Messstrecke befinden. Dabei kann der Lichtemitter den Lichtstrahl auf das Ausrichtelement senden, dieses den Lichtstrahl auf das Zielelement ausrichten, das mit dem Empfangselement verbunden sein kann oder den Lichtstrahl erst auf das Empfangselement lenkt. Die strahlbildende Optik, die insbesondere eine strahlaufweitende Optik ist, kann mit dem Lichtemitter, aber auch mit dem Ausrichtelement verbunden sein. Beispielsweise kann das Ausrichtelement aus einem gewölbten Spiegel bestehen, der zu einer Strahlaufweitung führt.

In vorteilhafter Ausgestaltung der Erfindung ist der Lichtemitter ein Laser mit einer strahlaufweitenden Optik.

Ein punktförmiger Laserdistanzsensor nach dem Stand der Technik würde bei einer Hubhöhe von 12 m beispielsweise ein Reflexionsziel mit einem Durchmesser von ca. 30 cm erfordern, um bei dem bekannten Ausweichen des Hubgerüstes aus der senkrechten Achse aufgrund Verbiegung immer zuverlässig von dem Laserstrahl getroffen zu werden. Durch die erfindungsgemäße Lösung können dennoch solche Laserdistanzsensoren nach dem Stand der Technik, die kostengünstig und in ausgereifter Technik zur Verfügung stehen, für die Hubhöhenmessung bei Flurförderzeugen eingesetzt werden

Der Lichtemitter kann ein Halbleiterlichtelement, insbesondere eine LED sein.

Vorteilhafterweise sind LED besonders kompakt und klein in ihrer Bauform. Mit LED können zum einen Laser verwirklicht werden und zum anderen ist es möglich, durch das Kunststoffgehäuse, in das die LED in vielen Ausführungsformen eingebettet ist, zugleich eine Optik umzusetzen. Des Weiteren bestehen auch LED, die ohne ein Laser zu sein, einen relativ engen Fokussierungslichtstrahl aussenden. Bei solchen LED ist es möglich, entweder durch eine eigene Optik, oder durch die Ausbildung der angeformten Optik des Gehäuses der LED, den erfindungsgemäßen aufgeweiteten Lichtstrahl zu bilden.

Vorteilhaft besteht die strahlbildende Optik aus einer Streulinse.

Eine separate, zusätzlich vorgesehene Streulinse stellt eine besonders kostengünstige Lösung da. Zusätzlich ermöglicht dies eine genaue Anpassung an die Bedürfnisse des jeweiligen Hubgerüstes in Bezug auf dessen Steifigkeit und Hubhöhe sowie die sich hieraus ergebende maximale seitliche Verbiegung, die das Maß der maximalen Aufweitung bestimmt.

Die strahlbildende Optik kann einen aufgeweiteten Lichtstrahl bilden, der kegelförmig ist.

In einer vorteilhaften Gestaltung der Erfindung ist das Ausrichtelement zugleich der Lichtemitter.

Da als Lichtemitter beispielsweise sehr kleine und kompakte Bauelemente wie Laserdioden zur Verfügung stehen, lassen sich diese auf einfache Art und Weise so montieren, dass über diese die Ausrichtung auf das Zielelement erreicht werden kann und, soweit erforderlich, auch eine gewisse Einstellbarkeit der Ausrichtung gegeben ist.

Vorteilhaft ist das Zielelement ein Reflexionsziel.

Dadurch können alle Bauteile, die elektrische Anschlüsse oder Signalleitungen benötigen, auf einer Seite der Messstrecke und somit beispielsweise an der Unterseite des Hubgerüstes angeordnet werden.

Bei der Messstrecke kann das Reflexionsziel gegenüber dem Lichtemitter und/oder dem Empfangselement an einem bei einer Hubbewegung sich relativ gegenüber dem Lichtemitter und/oder Empfangselement bewegenden Teil des Hubgerüstes oder an dem Lastaufnahmemittel angeordnet sein.

In vorteilhafter Ausgestaltung der Erfindung ist der Lichtemitter an dem Hubgerüst unten bzw. am Flurförderzeug angeordnet und das Reflexionsziel wird mit dem sich bewegenden Teil des Hubgerüstes oder mit dem Lastaufnahmemittel angehoben.

Vorteilhaft sind dann keine Durchführungen von Leitungen durch das Hubgerüst notwendig. Bei einer Anordnung des Lichtemitters und des Empfangselement unten wird das Reflexionsziel dabei entweder an dem Hubschlitten oder an dem Lastaufnahmemittel angebracht und misst somit direkt die Hubhöhe, die die Last hat. Alternativ kann aber auch an jedem anderen sich nach oben bewegenden Teil eines zum Beispiel mehrschüssigen Hubgerüstes das Reflexionsziel angebracht werden und somit spezifisch die Hubhöhe dieses Teils gemessen werden, soweit hierfür ein Bedürfnis besteht.

In einer günstigen Ausführungsform des erfindungsgemäßen Flurförderzeugs weist das Reflexionsziel von anderen durch den aufgeweiteten Lichtstrahl getroffenen Bereichen des Hubgerüstes oder Lastaufnahmemittels deutlich abweichende optische Reflexionseigenschaften auf, insbesondere einen sehr hohen Reflexionskoeffizienten für die Wellenlängen des Lichts des aufgeweiteten Lichtstrahls.

Das Reflexionsziel kann durch einen erheblich höheren Reflexionskoeffizienten, auch wenn es nur in der maximal angehobenen Hubposition einen kleinen Flächenanteil des aufgeweiteten Lichtstrahl reflektiert, den größten Signalanteil des von den Empfangselement erfassten Signals stellen. Dadurch werden Messfehler aufgrund an anderen Bauteilen reflektierten Lichts vermieden. Zusätzlich kann noch durch eine entsprechende farbliche Gestaltung, insbesondere dunkelfarbige und nicht glänzende bzw. matte Lackierung, die Reflexion an sonstigen Bauteilen minimiert werden.

In günstiger Ausgestaltung der Erfindung ist das Reflexionsziel eine Retroreflexionsfläche.

Retroreflexionsflächen zeichnen sich dadurch aus, dass einfallendes Licht genau in derselben Richtung unabhängig von dem Einfallwinkel zurück reflektiert wird. Beispiele hierfür sind Reflektoren, wie sie bei Lichtschranken und im Straßenverkehr eingesetzt werden. Retroreflexionsflächen stehen z.B. als Folien zur Verfügung und werden technisch beispielsweise durch Tripel-Spiegel umgesetzt. Da das Licht des aufgeweiteten, beispielsweise kegelförmigen, Lichtstrahls durch die Retroreflexionsfläche wieder in die Richtung zurückgespiegelt wird, aus der jeweils der einzelne Lichtstrahl kommt, führt dies dazu, dass das reflektierte Licht wieder auf den das Licht aussenden Lichtemitter zu fokussiert wird. Wenn das Empfangselement unmittelbar neben dem emittierenden Lichtemitter angeordnet ist, so wird der reflektierte Anteil des aufgeweiteten Lichtstrahls auch zu dem Empfangselement hin fokussiert.

Vorteilhaft bilden der Lichtemitter und das Empfangselement eine bauliche Einheit, die besonders kompakt gestaltet werden kann, und die insbesondere ein gemeinsames optisches Fenster zum Aussenden des Lichts und zum Empfang des reflektierten Lichtanteils aufweist

Das Reflexionsziel kann fokussierend geformt sein.

Alternativ zu einer Retroreflexionsfläche kann auch eine normale Spiegelfläche eingesetzt werden. Diese kann mit einem Radius gewölbt sein, insbesondere einem Radius, der ungefähr der maximalen Hubhöhe entspricht. Auch dadurch wird dann der reflektierte Anteil des Lichtes wieder auf den Lichtemitter bzw. ein daneben angeordnetes Empfangselement hin zumindest in der Position der maximalen Hubhöhe fokussiert.

Vorteilhaft ist eine Reinigungsvorrichtung für die Optik und/oder das Empfangselement vorgesehen, insbesondere eine Reinigungsvorrichtung mit Spritzwasser und/oder Pressluft und/oder einem Scheibenwischer und/oder einer Bürstenvorrichtung.

Vor allem in Umgebungen mit einer hohen Belastung durch Staub und Schmutz kann dadurch die Funktionssicherheit gewährleistet werden.

In einer erfindungsgemäßen Weiterbildung weist die Oberfläche der strahlbildenden Optik und/oder des Empfangselements einen Lotuseffekt auf.

Dadurch kann ein Anhaften von Schmutz vorteilhaft vermieden werden. Insbesondere kann aber auch bei Flurförderzeugen, vor allem Gegengewichtsgabelstaplern, die im Freien eingesetzt werden, eine Benetzung mit Wasser und im Winter eventuell eine Eisbildung verhindert werden.

Die Oberfläche kann gegenüber der Horizontalen geneigt sein.

Zusammen mit dem zuvor beschriebenen Lotuseffekt führt dies dazu, dass Wasser stets abperlt und dabei auch Staub mit sich nimmt. Bei Flurförderzeugen, die auch im Freien eingesetzt werden, führt somit bereits Regen zu einer Reinigung des Systems Vorteilhaft weisen die strahlbildende Optik und/oder das Empfangselement und/oder das Zielelement eine Beheizung auf.

Dadurch kann bei Minustemperaturen eine Eisbildung und somit ein Ausfall des Hubhöhenmesssystems verhindert werden. Dadurch wird ein zuverlässiger Einsatz auch im Winter im Freien und in Kühlhäusern ermöglicht.

Vorteilhaft kann durch einen weiteren Referenzsensor, insbesondere einen Laserdistanzsensor, ein Abstand zu einer Fahrbahnoberfläche bestimmt werden.

Bei Gegengewichtsgabelstaplern mit Vollgummi-Elastikreifen kann es durch den Reifenverschleiß mit der Zeit zu einer merklichen Veränderung der Bodenfreiheit und somit auch des einem Messwert entsprechenden Absolutwertes der Hubhöhe kommen. Durch einen Referenzsensor kann dies korrigiert werden. Es ist auch möglich, durch jedes andere denkbare Verfahren den Reifenverschleiß zu bestimmen und aus einer berechneten Veränderung des Reifenradius auf die Änderung der Bodenfreiheit zu schließen.

In einer Ausgestaltung der Erfindung kann durch eine Eingabevorrichtung eine Hubhöhe als Bezugswert eingegeben werden.

Dies ermöglicht eine Eingabe eines Bezugswertes durch eine Bedienperson und eine Korrektur von mit der Zeit auftretenden Abweichungen, etwa aufgrund des Reifenverschleißes.

Durch Sensormittel kann ein Bodenkontakt des Lastaufnahmemittels erfasst und durch diesen ein Bezugswert für die Hubhöhe bestimmt werden.

Wenn durch einen geeigneten Sensor festgestellt wird, dass das Lastaufnahmemittel, insbesondere beispielsweise eine Lastgabel, auf dem Boden aufsetzt, so kann dies als Bezugswert Null gesetzt werden und dadurch auf einfache Weise die absolute Hubhöhe durch das Hubhöhenmesssystem bestimmt werden.

Vorteilhaft ist der Lichtemitter und/oder das Ausrichtelement am Hubgerüst in seiner Ausrichtung einstellbar montiert.

Durch eine justierbare Montage am Hubgerüst wird eine Ausrichtung des Lichtstrahls möglich. Dies ist besonders vorteilhaft bei einem aufgeweiteten Lichtstrahl, da hier das Zentrum des Lichtstrahls auf das Reflexionsziel ausgerichtet werden kann bei nicht verbogenem Hubgerüst und sicher gestellt werden kann, dass bei allen Verbiegungen des Hubgerüstes das Zielelement oder das Reflexionsziel innerhalb des aufgeweiteten Lichtstrahls bleibt.

Die Aufgabe wird auch gelöst durch ein Verfahren zur Erfassung der Hubhöhe bei einem Flurförderzeug wie es zuvor beschrieben wurde.

Das Verfahren zur Erfassung der Hubhöhe bei einem Flurförderzeug weist die bereits zuvor geschilderten Vorteile auf.

In einer weiteren Ausbildung der Erfindung kann zur Überprüfung der Werte der Hubhöhe eine Plausibilitätsprüfung erfolgen, indem eine Überprüfung auf unzulässige Werte für die Hubhöhe und/oder auf Sprünge in der Änderung der Hubhöhe und/oder auf Parallelität einer Hubhöhenänderung zu einem Hubhöhensteuersignal innerhalb eines zulässigen Wertebereichs erfolgt.

Dadurch kann eine Überprüfung des Signals erfolgen und eine Unterbrechung der Sichtverbindung zwischen Lichtemitter und Reflexionsziel z.B. durch Umwelteinflüsse wie Schmutz, Staub, Eisbildung etc. oder auch eine Verdeckung durch hereinragende Hindernisse usw. erkannt und berücksichtigt werden. Wenn eine Hubhöhenänderung erfolgt, obwohl kein Steuersignal für den Hubantrieb vorliegt, oder wenn eine Hubhöhenänderung in einer Geschwindigkeit erfolgt, die durch den Hubantrieb nicht erreicht werden kann, mithin ein zu großer Gradient der Hubbewegung der ein unstetiger Sprung der Hubbewegung vorliegt, so kann von einer fehlerhaften Messung ausgegangen werden.

Zur Überprüfung der Werte der Hubhöhe kann eine Plausibilitätsprüfung erfolgen, indem hubhöhenabhängig vorgegebene Wertebereiche der Intensität des in dem Empfangselement empfangenen Signals, insbesondere eines an einem Reflexionsziel reflektierten Signals, mit der erfassten Hubhöhe verglichen werden.

Wenn das Empfangselement eine Information über die Intensität des gemessenen Signals liefert, kann dadurch eine Überprüfung der Funktionsfähigkeit und Korrektheit der Hubhöhenmessung erfolgen. Das Reflexionsziel reflektiert mit zunehmender Hubhöhe in dem aufgeweiteten Lichtstrahl einen relativ gesehen immer kleineren Anteil des Strahls. Dadurch nimmt die Intensität des in dem Empfangselement empfangenen Signals mit zunehmender Hubhöhe ab. Ebenso erreicht das Zielelement nur noch ein kleinerer Anteil des Strahls. Dieser Vergleich der Intensität kann durch einen Steuerungsrechner erfolgen, der in dem Empfangselement integriert ist oder auch in einem Steuerungsrechner des Flurförderzeugs.

Vorteilhaft können über einen festgelegten Erfassungszeitraum die minimalen auftretenden Werte der Hubhöhe als Bezugswert Null für die Hubhöhe verwendet werden.

Wenn über einen gewissen Zeitraum die Minimalwerte der auftretenden Hubhöhe erfasst werden, können diese Werte als diejenigen angenommen werden, die dem Aufsetzen des Lastaufnahmemittels auf dem Boden entsprechen und dieser Wert kann als Bezugswert auf Null gesetzt werden. Dies lässt sich einfach zum Beispiel in einer Fahrzeugsteuerung oder einem sonstigen zur Verfügung stehenden Steuerungsrechner rein durch Software umsetzen, ohne dass hierfür weitere Hardware erforderlich wäre.

In einer vorteilhaften Ausgestaltung des erfindungsgemäßen Verfahrens wird die Intensitätsänderung des in dem Empfangselement empfangenen Signals, insbesondere eines an einem Reflexionsziel reflektierten Signals, im zeitlichen Verlauf überwacht und bei einem Unterschreiten von Schwellenwerten wird eine Verunreinigung des Hubhöhenmesssystems erkannt.

Bei zunehmender Verschmutzung der Optik des Lichtemitters bzw. eines optischen Sichtfensters des Empfangselements kommt es zu einer allmählichen Reduzierung der Signalstärke.

Die Schwellenwerte können hubhöhenabhängig sein.

Da wie zuvor beschrieben die Intensität des Signals auch mit der Hubhöhe abnimmt kann dadurch die Erfassung einer zunehmenden Verschmutzung genauer erfolgen.

Weitere Vorteile und Einzelheiten der Erfindung werden anhand der in den schematischen Figuren dargestellten Ausführungsbeispiele näher erläutert. Hierbei zeigt
- Fig. 1: einen erfindungsgemäßen Gegengewichtsgabelstapler in einer Seitenansicht,
- Fig. 2: schematisch ein Hubgerüst nach dem Stand der Technik in Seitenansicht,
- Fig. 3: schematisch das Hubgerüst der Fig. 2 in Vorderansicht,
- Fig. 4: schematisch ein weiteres Hubgerüst nach dem Stand der Technik in Vorderansicht,
- Fig. 5: schematisch ein weiteres Hubgerüst nach dem Stand der Technik in Seitenansicht,
- Fig. 6: schematisch das Hubgerüst des Gabelstaplers der Fig. 1 und
- Fig. 7: schematisch ein weiteres Ausführungsbeispiel das Hubgerüst eines erfindungsgemäßen Gabelstaplers entsprechen demjenigen der Fig. 1.

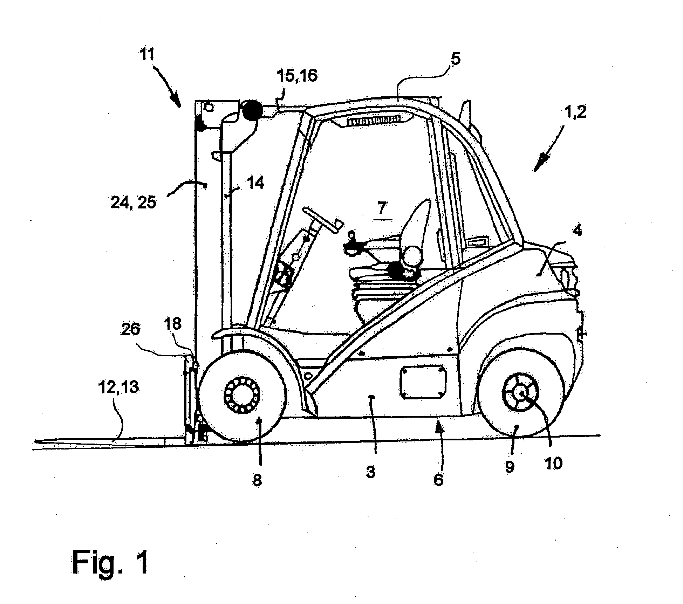

In der Fig. 1 ist ein erfindungsgemäßes Flurförderzeug 2, beispielsweise ein Gegengewichtsgabelstapler 1 als Ausführungsbeispiel eines Flurförderzeugs 2, in einer Seitenansicht dargestellt. Der Gegengewichtsgabelstapler 1 umfasst in einem mittleren Abschnitt eines von einem Rahmen 3, einem Gegengewicht 4 und einem Fahrerschutzdach 5 gebildeten Fahrzeugaufbaus 6 innerhalb des Fahrerschutzdaches 5 einen Fahrerarbeitsplatz 7.

Unterhalb des Fahrerarbeitsplatzes 7 ist ein Aggregateraum ausgebildet, in dem sich die Komponenten des Antriebssystems des Gabelstaplers 1 befinden. Bei einem verbrennungs-motorischen Antriebssystem können unterhalb des Fahrerarbeitsplatzes 7 ein Verbrennungsmotor und die von dem Verbrennungsmotor angetriebenen Komponenten eines Fahrantriebs und einer Arbeitshydraulk angeordnet sein. Bei einem batterie-elektrischen Antriebssystem ist unterhalb des Fahrerarbeitsplatzes 7 ein Batteriefach zur Aufnahme einer beispielsweise als Batterieblock ausgebildeten Energieversorgungseinrichtung ausgebildet, mit der der Fahrantrieb und die Arbeitshydraulik mit elektrischer Energie versorgt werden.

In der Fig. 1 sind weiterhin im vorderen Bereich des Gegengewichtsgabelstaplers 1 Räder dargestellt, die als Antriebsräder 8 ausgebildet sind, und im heckseitigen Bereich eine mit gelenkten Rädern 9 versehene Lenkachse 10.

An der Vorderseite des Flurförderzeugs 2 ist ein Hubgerüst 11 angeordnet, an dem ein als Lastgabel 12 ausgebildetes Lastaufnahmemittel 13 anhebbar und absenkbar geführt ist.

Das Hubgerüst 11 umfasst einen Standmast 14, der von zwei seitlich, in Fahrzeugquerrichtung beabstandet angeordneten vertikalen Hubgerüstprofilen gebildet ist. Der Standmast 14 ist mittels eines Neigeantriebs 15, der von Neigezylindern 16 gebildet ist, in der Neigung verstellbar am Fahrzeugaufbau 6 angeordnet.

Das Hubgerüst 11 ist als Mehrfach-Hubgerüst ausgebildet, das ein oder mehrere in dem Standmast 14 geführte und nach oben ausfahrbare Ausfahrmaste 24, 25 aufweist, in denen das Lastaufnahmemittel 13 an einem Hubschlitten 26 höhenverstellbar geführt ist. Das Hubgerüst 11 ist in Fahrzeugquerrichtung zwischen den Antriebsrädern 8 angeordnet.

An der Lastgabel 12 bzw. dem Hubschlitten 26 ist ein Reflexionsziel 18 angeordnet, das von einem an dem Standmast oder an dem Flurförderzeug 2 angeordneten und in der Darstellung der Fig. 1 nicht erkennbaren Lasersensor angestrahlt wird. Das reflektierte Laserlicht wird von einem mit dem Lasersensor verbundenen Empfangselement erfasst.

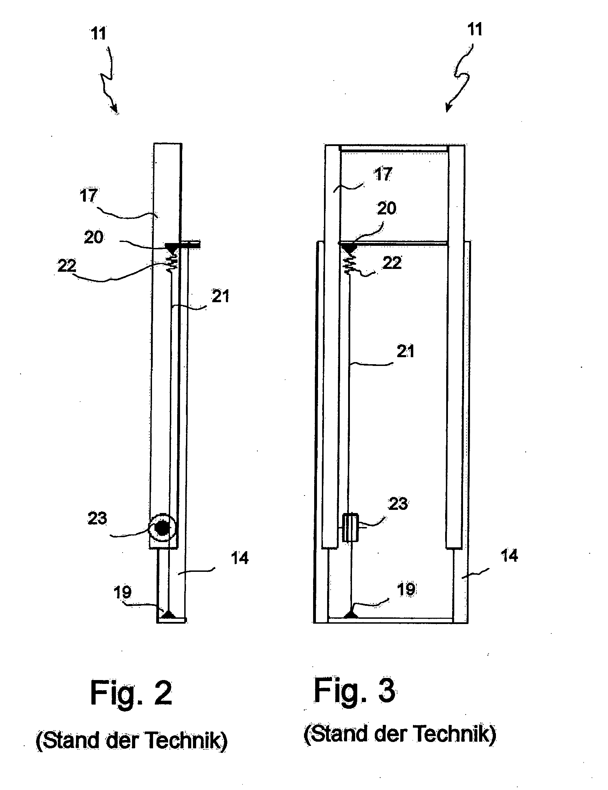

Die Fig. 2 zeigt schematisch ein Hubgerüst 11 nach dem Stand der Technik in Seitenansicht innen. Elemente, die mit Fig. 1 sowie den folgenden Figuren übereinstimmen, sind jeweils mit den gleichen Bezugszeichen versehen. Das Hubgerüst 11 besteht aus einem Standmast 14, an dem hier ein einzelner Ausfahrmast 17 nach oben ausschiebbar geführt ist. Zwischen einem unteren Befestigungspunkt 19 an dem Standmast 14 und einem oberen Befestigungspunkt 20 an dem Standmast 14 ist ein Seil 21 gespannt, das durch eine Feder 22 unter Spannung gehalten wird. Das Seil 21 ist mit mindestens einer Umschlingung über eine Messrolle 23 geführt, die an dem Ausfahrmast 17 gelagert ist.

Die Fig. 3 zeigt schematisch das Hubgerüst 11 der Fig. 2 in Vorderansicht, das aus dem Standmast 14 und dem an diesem geführten Ausfahrmast 17 aufgebaut ist. Das zwischen dem unteren Befestigungspunkt 19 und dem oberen Befestigungspunkt 20 an dem Standmast 14 durch die Feder 22 gespannte Seil 21 ist mit einer Umschlingung über die Messrolle 23 geführt.

Wenn der Ausfahrmast 17 gegenüber dem Standmast 14 nach oben bewegt wird, so wird die Messrolle 23 mit dem Ausfahrmast 17 zusammen nach oben bewegt und durch die Seilumschlingungen in Drehungen versetzt, die ein Maß für die Zunahme oder Abnahme der Höhe sind.

Bei der Hubhöhenmessung bei diesem Hubgerüst 11 nach dem Stand der Technik kann es zum Reißen des Seils 21 durch mechanischen Verschleiß sowie die Wechselbeanspruchung kommen. Auch kann es durch Schlupf des Seils 21 zu Messfehlern kommen.

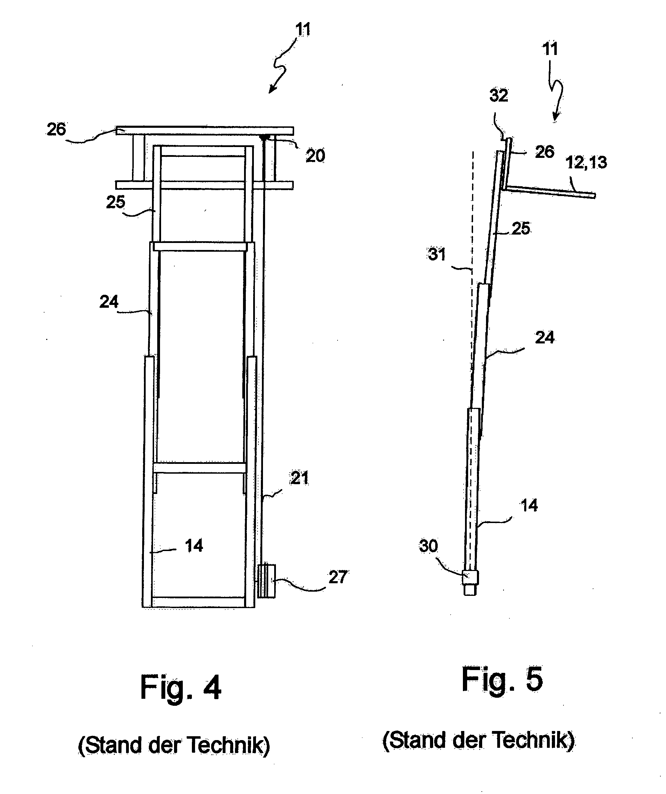

Die Fig. 4 zeigt schematisch ein weiteres Hubgerüst 11 nach dem Stand der Technik in Vorderansicht. Das Hubgerüst 11 besteht wiederum aus einem Standmast 14, an dem ein erster Ausfahrmast 24 und ein zweiter Ausfahrmast 25 nach oben ausschiebbar geführt sind. An einem oberen Befestigungspunkt 20 an einem Hubschlitten 26 ist ein Seil 21 befestigt, das durch eine an dem Standmast 14 gelagerte Aufwickelrolle 27 aufgerollt und unter Spannung gehalten wird. Wenn der Hubschlitten 26 an dem Hubmast 11 nach oben bewegt wird, zieht er das Seil 21 von der Aufwickelrolle 27 ab. Durch die Umdrehungen der Aufwickelrolle 27 kann die Länge des abgerollten Seiles 21 entsprechend der Hubhöhe erfasst werden.

Bei der Hubhöhenmessung bei diesem Hubgerüst 11 nach dem Stand der Technik kann es zu Funktionsausfällen kommen, wenn die Aufwickelrolle 27 durch Verschmutzung in der Funktion beeinträchtigt wird. Insbesondere kann es im Winter bei Betrieb im Freien durch Eisbildung zu Ausfällen oder Beschädigungen kommen bis hin zu einem Reißen des Seiles 21. Auch tritt relativ häufig der Fall auf, dass das Seil 21 ersetzt werden muss, da es verschlissen ist.

Die Fig. 5 zeigt schematisch ein weiteres Hubgerüst 11 nach dem Stand der Technik in Seitenansicht. Das Hubgerüst 11 weist ebenfalls einen Standmast 14 auf, an dem ein erster Ausfahrmast 24 und ein zweiter Ausfahrmast 25 nach oben ausschiebbar geführt sind, sowie einen Hubschlitten 26 mit einer Lastgabel 12 als Lastaufnahmemittel 13. An dem Standmast 14 ist ein Lasersensor 30 angeordnet, der einen Laserstrahl 31 senkrecht nach oben auf ein Reflexionsziel 32, beispielsweise einen Spiegel oder Reflektor, richtet, das an dem Hubschlitten 26 angebracht ist.

Die Fig. 5 zeigt die Situation, in der das Hubgerüst 11 mit großer Hubhöhe eine hier nicht dargestellte Last handhabt und bei der beispielsweise das Flurförderzeug aus einer Rangierbewegung abbremst. Hierbei kommt es zu Schwingungen des Hubgerüstes 11, insbesondere zu einer seitlichen Auslenkung des oberen Bereiches des Hubgerüstes 11 aufgrund des Spiels, die die Führungen des Standmasts 14 und des ersten Ausfahrmastes 24 sowie des zweiten Ausfahrmastes 25 jeweils zueinander haben. Der Laserstrahl 31 trifft daher nicht mehr das Reflexionsziel 32 und die Hubhöhenmessung fällt aus. Insbesondere kann es auch durch ein Lastgewicht dazu kommen, dass auch nach dem Ausschwingen das Hubgerüst 11 noch so weit gebogen und somit in seinem oberen Bereich ausgelenkt ist, dass der Laserstrahl 31 nicht das Reflexionsziel 32 trifft.

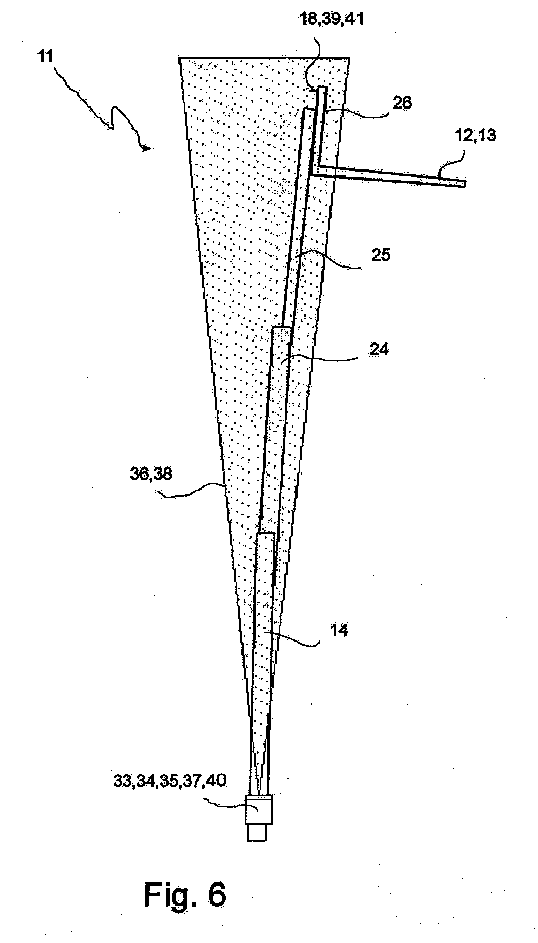

Die Fig. 6 zeigt schematisch das Hubgerüst 11 des erfindungsgemäßen Flurförderzeugs 2 der Fig. 1, das beispielsweise als Gegengewichtsgabelstapler 1 ausgeführt ist.

Das Hubgerüst 11 weist einen Standmast 14 auf, an dem der erste Ausfahrmast 24 und der zweite Ausfahrmast 25 nach oben ausschiebbar geführt sind, sowie der Hubschlitten 26 mit der Lastgabel 12 als Lastaufnahmemittel 13. An dem Standmast 14 ist eine Sensoreinheit 33 bestehend aus einem Laser 37 als Lichtemitter 34 und Empfangselement 35 angeordnet. Der Laser 37 weist eine aufweitende Optik bestehend aus einer Streulinse auf, die den Laserstrahl zu einem Laserstrahlkegel 38 als aufgeweiteten Lichtstrahl 36 aufweitet. Der Laserstrahlkegel 38 ist senkrecht nach oben auf ein Reflexionsziel 18 gerichtet, das an dem Hubschlitten 26 angebracht ist und eine Retroreflexionsfläche 39 ist, die Lichtstrahlen in einem bestimmten Winkelbereich unabhängig vom Einfallwinkel auf sich selbst reflektiert. Dabei ist der Öffnungswinkel des Laserstrahlkegels 38 so gewählt, dass das Reflexionsziel 18 bei im normalen Betrieb möglicher maximaler Auslenkung des Hubgerüstes 11, beispielsweise durch Fahrbewegungen bzw. eine aufliegende Last, sich noch innerhalb des Laserstrahlkegels 38 befindet, während der Hub des Hubgerüstes 11 maximal ist. In dem Ausführungsbeispiel der Fig. 6 ist der Lichtemitter 34 zugleich ein Ausrichtelement 40 und das Reflexionsziel 18 stellt zugleich ein Zielelement 41 dar.

Dadurch wird immer zuverlässig sicher gestellt, dass auch bei Verbiegung des Hubgerüstes 11 eine Hubhöhenmessung erfolgen kann.

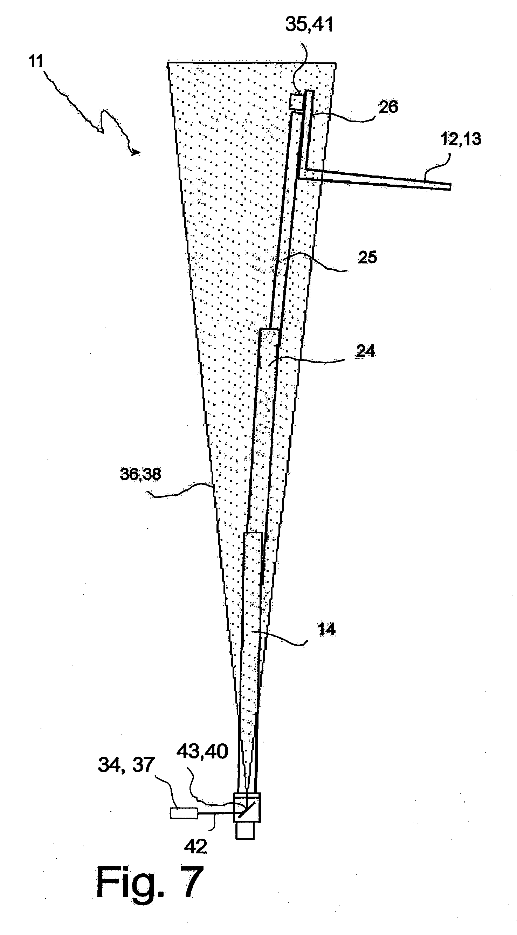

Fig. 7 zeigt schematisch ein weiteres Ausführungsbeispiel des Hubgerüsts eines erfindungsgemäßen Flurförderzeugs 2 der Fig. 1. Das Hubgerüst 11 weist den Standmast 14 auf, an dem der erste Ausfahrmast 24 und der zweite Ausfahrmast 25 nach oben ausschiebbar geführt sind, sowie der Hubschlitten 26 mit der Lastgabel 12 als Lastaufnahmemittel 13. An dem Standmast 14 ist als Lichtemitter 34 ein Laser 37 angeordnet, der einen Laserstrahl 42 auf einen Spiegel 43 als Ausrichtelement 40 sendet. Der Spiegel 43 ist z. b. gewölbt und bildet dadurch eine aufweitende Optik, die den Laserstrahl zu einem Laserstrahlkegel 38 als aufgeweiteten Lichtstrahl 36 aufweitet. Alternativ kann auch zwischen Lichtemitter 34 und Spiegel 43 eine aufweitende Linse angeordnet werden. Der Laserstrahlkegel 38 wird durch das Ausrichtelement 40 nach oben das Empfangselement 35 gerichtet, das zugleich das Zielelement 41 bildet und an dem Hubschlitten 26 angebracht ist. Dabei ist der Öffnungswinkel des Laserstrahlkegels 38 so gewählt, dass das Empfangselement 35 bei im normalen Betrieb möglicher maximaler Auslenkung des Hubgerüstes 11 sich noch innerhalb des Laserstrahlkegels 38 befindet, während der Hub des Hubgerüstes 11 maximal ist.

Dadurch wird immer zuverlässig sichergestellt, dass auch bei Verbiegung des Hubgerüstes 11 eine Hubhöhenmessung erfolgen kann.

Die Anordnung des Empfangselements 35 als Zielelement 41 an dem Hubschlitten 26 kann ebenfalls bei der Ausführungsform der Fig. 6 eingesetzt werden, bei der der Laser 37 eine aufweitende Optik aufweist, um anstelle des Ausrichtselements 40 den Laserstrahl zu einem Laserstrahlkegel 38 als aufgeweiteten Lichtstrahl 36 aufzuweiten.

## Patentansprüche

1. Flurförderzeug mit einem Hubgerüst (11) und einem an dem Hubgerüst (11) höhenbeweglich angeordneten Lastaufnahmemittel (13),
wobei das Hubgerüst (11) ein Hubhöhenmesssystem aufweist, bestehend aus einem einen Lichtstrahl aussendenden Lichtemitter (34), einem Empfangselement (35), einem optischen Ausrichtelement (40), einem Zielelement (41) sowie einer zwischen diesen angeordneten Messstrecke, deren Länge sich mit der Hubhöhe ändert,
**dadurch gekennzeichnet,**
**dass** das Ausrichtelement (40) und/oder der Lichtemitter (34) eine strahlbildende, insbesondere strahlaufweitende Optik aufweisen, so dass bei maximaler Hubhöhe das Zielelement (41) sich für alle Positionen zulässiger maximaler Verbiegung des Hubgerüstes (11) innerhalb des aufgeweiteten Lichtstrahls (36) des Lichtemitters (34) befindet.

2. Flurförderzeug nach Anspruch 1,
**dadurch gekennzeichnet,**
**dass** der Lichtemitter ein Laser (37) mit einer strahlaufweitenden Optik ist.

3. Flurförderzeug nach Anspruch 1 oder 2,
**dadurch gekennzeichnet,**
**dass** der Lichtemitter (34) ein Halbleiterlichtelement, insbesondere eine LED, ist.

4. Flurförderzeug nach einem der Ansprüche 1 bis 3,
**dadurch gekennzeichnet,**
**dass** die strahlbildende Optik aus einer strahlaufweitenden Streulinse gebildet ist.

5. Flurförderzeug nach einem der Ansprüche 1 bis 4,
**dadurch gekennzeichnet,**
**dass** die strahlbildende Optik einen aufgeweiteten Lichtstrahl (36) bildet, der kegelförmig ist.

6. Flurförderzeug nach einem der Ansprüche 1 bis 5,
**dadurch gekennzeichnet,**
**dass** das Ausrichtelement (40) zugleich der Lichtemitter (34) ist.

7. Flurförderzeug nach einem der Ansprüche 1 bis 6,
**dadurch gekennzeichnet,**
**dass** das Zielelement (41) ein Reflexionsziel (18) ist.

8. Flurförderzeug nach Anspruch 6 und 7,
**dadurch gekennzeichnet,**
**dass** bei der Messstrecke das Reflexionsziel (18) gegenüber dem Lichtemitter (34) und/oder dem Empfangselement (35) an einem bei einer Hubbewegung sich relativ gegenüber dem Lichtemitter (34) und/oder Empfangselement (35) bewegenden Teil des Hubgerüstes (11) oder an dem Lastaufnahmemittel (13) angeordnet ist.

9. Flurförderzeug nach Anspruch 8,
**dadurch gekennzeichnet,**
**dass** der Lichtemitter (34) an dem Hubgerüst (11) unten bzw. am Flurförderzeug (2) angeordnet ist und das Reflexionsziel (18) mit dem sich bewegenden Teil des Hubgerüstes (11) oder mit dem Lastaufnahmemittel (13) angehoben wird.

10. Flurförderzeug nach einem der Ansprüche 7 bis 9,
**dadurch gekennzeichnet,**
**dass** das Reflexionsziel (18) von anderen durch den aufgeweiteten Lichtstrahl (36) getroffenen Bereichen des Hubgerüstes (11) oder des Lastaufnahmemittels (13) deutlich abweichende optische Reflexionseigenschaften aufweist, insbesondere einen sehr hohen Reflexionskoeffizienten für die Wellenlängen des Lichts des aufgeweiteten Lichtstrahls (36).

11. Flurförderzeug nach einem der Ansprüche 7 bis 10,
**dadurch gekennzeichnet,**
**dass** das Reflexionsziel (18) eine Retroreflexionsfläche (39) ist.

12. Flurförderzeug nach einem der Ansprüche 7 bis 11,
**dadurch gekennzeichnet,**
**dass** das Reflexionsziel fokussierend geformt ist.

13. Flurförderzeug nach einem der Ansprüche 1 bis 12,
**dadurch gekennzeichnet,**
**dass** eine Reinigungsvorrichtung für die Optik und/oder das Empfangselement (35) vorgesehen ist, insbesondere eine Reinigungsvorrichtung mit Spritzwasser und/oder Pressluft und/oder einem Scheibenwischer und/oder einer Bürstenvorrichtung.

14. Flurförderzeug nach einem der Ansprüche 1 bis 13,
**dadurch gekennzeichnet,**
**dass** eine Oberfläche der strahlbildenden Optik und/oder des Empfangselements (35) einen Lotuseffekt aufweist.

15. Flurförderzeug nach Anspruch 14,
**dadurch gekennzeichnet,**
**dass** die Oberfläche gegenüber der Horizontalen geneigt ist.

16. Flurförderzeug nach einem der Ansprüche 1 bis 15,
**dadurch gekennzeichnet,**
**dass** die strahlbildende Optik und/oder das Empfangselement (35) und/oder das Zielelement eine Beheizung aufweisen.

17. Flurförderzeug nach einem der Ansprüche 1 bis 16,
**dadurch gekennzeichnet,**
**dass** durch einen weiteren Referenzsensor, insbesondere einen Laserdistanzsensor, ein Abstand zu einer Fahrbahnoberfläche bestimmt werden kann.

18. Flurförderzeug nach einem der Ansprüche 1 bis 17,
**dadurch gekennzeichnet,**
**dass** durch eine Eingabevorrichtung eine Hubhöhe als Bezugswert eingegeben werden kann.

19. Flurförderzeug nach einem der Ansprüche 1 bis 18,
**dadurch gekennzeichnet,**
**dass** durch Sensormittel ein Bodenkontakt des Lastaufnahmemittels (13) erfasst und durch diesen ein Bezugswert für die Hubhöhe bestimmt werden kann.

20. Flurförderzeug nach einem der Ansprüche 1 bis 19,
**dadurch gekennzeichnet,**
**dass** der Lichtemitter (34) und/oder das Ausrichtelement (40) am Hubgerüst (11) in seiner Ausrichtung einstellbar montiert ist.

21. Verfahren zur Erfassung der Hubhöhe bei einem Flurförderzeug nach einem der vorhergehenden Ansprüche.

22. Verfahren nach Anspruch 21,
**dadurch gekennzeichnet,**
**dass** zur Überprüfung der Werte der Hubhöhe eine Plausibilitätsprüfung erfolgt, indem eine Überprüfung auf unzulässige Werte für die Hubhöhe und/oder auf Sprünge in der Änderung der Hubhöhe und/oder auf Parallelität einer Hubhöhenänderung zu einem Hubhöhensteuersignal innerhalb eines zulässigen Wertebereichs erfolgt.

23. Verfahren nach Anspruch 21 oder 22,
**dadurch gekennzeichnet,**
**dass** zur Überprüfung der Werte der Hubhöhe eine Plausibilitätsprüfung erfolgt, indem hubhöhenabhängig vorgegebene Wertebereiche der Intensität des in dem Empfangselement (35) empfangenen Signals, insbesondere eines an einem Reflexionsziel (18) reflektierten Signals, mit der erfassten Hubhöhe verglichen werden.

24. Verfahren nach einem der Ansprüche 21 bis 23,
**dadurch gekennzeichnet,**
**dass** über einen festgelegten Erfassungszeitraum die minimalen auftretenden Werte der Hubhöhe als Bezugswert Null für die Hubhöhe verwendet werden.

25. Verfahren nach einem der Ansprüche 21 bis 24,
**dadurch gekennzeichnet,**
**dass** die Intensitätsänderung des in dem Empfangselement (35) empfangenen
Signals, insbesondere eines an einem Reflexionsziel (18) reflektierten Signals, im zeitlichen Verlauf überwacht wird und bei einem Unterschreiten von Schwellenwerten eine Verunreinigung des Hubhöhenmesssystems erkannt wird.

26. Verfahren nach Anspruch 25,
**dadurch gekennzeichnet,**
**dass** die Schwellenwerte hubhöhenabhängig sind.

## Claims

1. Industrial truck with a lifting frame (11) and a load-bearing means (13) arranged on the lifting frame (11) in a vertically movable fashion, the lifting frame (11) having a lifting height measurement system consisting of a light emitter (34) emitting a light beam, a receiving element (35), an optical alignment element (40), a target element (41) and a measurement section which is arranged between said elements and whose length changes with the lifting height, **characterized in that** the alignment element (40) and/or the light emitter (34) have a beam-forming, in particular beam-expanding optics such that for maximum lifting height the target element (41) is located within the expanded light beam (36) of the light emitter (34) for all positions of permissible maximum distortion of the lifting frame (11).

2. Industrial truck according to Claim 1, **characterized in that** the light emitter is a laser (37) with a beam-expanding optics.

3. Industrial truck according to Claim 1 or 2, **characterized in that** the light emitter (34) is a semiconductor light element, in particular an LED.

4. Industrial truck according to one of Claims 1 to 3, **characterized in that** the beam-forming optics is formed from a beam-expanding diverging lens.

5. Industrial truck according to one of Claims 1 to 4, **characterized in that** the beam-forming optics forms an expanded light beam (36) which is conical.

6. Industrial truck according to one of Claims 1 to 5, **characterized in that** the alignment element (40) is simultaneously the light emitter (34).

7. Industrial truck according to one of Claims 1 to 6, **characterized in that** the target element (41) is a reflection target (18).

8. Industrial truck according to Claims 6 and 7, **characterized in that** in the measurement section the reflection target (18) is arranged opposite the light emitter (34) and/or the receiving element (35) on a part of the lifting frame (11) which moves relative to the light emitter (34) and/or receiving element (35) during a lifting movement, or on the load-bearing means (13).

9. Industrial truck according to Claim 8, **characterized in that** the light emitter (34) is arranged at the bottom of the lifting frame (11) or on the industrial truck (2), and the reflection target (18) is raised with the moving part of the lifting frame (11) or with the load-bearing means (13).

10. Industrial truck according to one of Claims 7 to 9, **characterized in that** the reflection target (18) has optical reflection properties, in particular a very high reflection coefficient for the wavelength of the light of the expanded light beam (36), which deviate distinctly from other regions of the lifting frame (11) or of the load-bearing means (13) struck by the expanded light beam (36).

11. Industrial truck according to one of Claims 7 to 10, **characterized in that** the reflection target (18) is a retroreflection surface (39).

12. Industrial truck according to one of Claims 7 to 11, **characterized in that** the reflection target is shaped to focus.

13. Industrial truck according to one of Claims 1 to 12, **characterized in that** a cleaning apparatus is provided for the optics and/or the receiving element (35), in particular a cleaning apparatus with splash water and/or compressed air and/or a screen wiper and/or a brushing apparatus.

14. Industrial truck according to one of Claims 1 to 13, **characterized in that** a surface of the beam-forming optics and/or of the receiving element (35) exhibits a lotus effect.

15. Industrial truck according to Claim 14, **characterized in that** the surface is inclined to the horizontal.

16. Industrial truck according to one of Claims 1 to 15, **characterized in that** the beam-forming optics and/or the receiving element (35) and/or the target element have a heating means.

17. Industrial truck according to one of Claims 1 to 16, **characterized in that** a distance from a driveway surface can be determined by a further reference sensor, in particular a laser distance sensor.

18. Industrial truck according to one of Claims 1 to 17, **characterized in that** a lifting height can be input as reference value by an input apparatus.

19. Industrial truck according to one of Claims 1 to 18, **characterized in that** a ground contact of the load-bearing means (13) can be detected by sensor means, and a reference value for the lifting height can be determined from said contact.

20. Industrial truck according to one of Claims 1 to 19, **characterized in that** the light emitter (34) and/or the alignment element (40) is mounted on the lifting frame (11) such that its alignment can be set.

21. Method for detecting the lifting height for an industrial truck according to one of the preceding claims.

22. Method according to Claim 21, **characterized in that** in order to check the values of the lifting height a plausibility test is performed by checking for impermissible values for the lifting height and/or for jumps in the change in the lifting height and/or for parallelism of a lifting height change with respect to a lifting height control signal within a permissible value range.

23. Method according to Claim 21 or 22, **characterized in that** in order to check the values of the lifting height a plausibility test is performed by comparing value ranges, prescribed as a function of lifting height, of the intensity of the signal received in the receiving element (35), in particular of a signal reflected at a reflection target (18), with the detected lifting height.

24. Method according to one of Claims 21 to 23, **characterized in that** the minimum values occurring for the lifting height are used as reference value zero for the lifting height over a fixed detection period.

25. Method according to one of Claims 21 to 24, **characterized in that** the change in intensity in the signal received in the receiving element (35), in particular in a signal reflected at a reflection target (18), is monitored in the time profile, and a contamination of the lifting height measurement system is recognized from an undershooting of threshold values.

26. Method according to Claim 25, **characterized in that** the threshold values are a function of lifting height.

## Revendications

1. Chariot de manutention doté d'un cadre de levage (11) et d'un moyen de réception de charge (13) disposé de façon mobile en hauteur au niveau du cadre de levage (11) ;
le cadre de levage (11) comportant un système de mesure de hauteur de levage composé d'un émetteur de lumière (34) émettant un faisceau lumineux, d'un élément de réception (35), d'un élément d'orientation optique (40), d'un élément cible (41) ainsi que d'un tronçon de mesure disposé entre eux et dont la longueur varie avec la hauteur de levage ;
**caractérisé en ce que** :
l'élément d'orientation (40) et/ou l'émetteur de lumière (34) comportent un système optique formant le faisceau, notamment élargissant le faisceau, de sorte qu'en présence d'une hauteur de levage maximale, l'élément cible (41) se trouve à l'intérieur du faisceau lumineux (36) élargi de l'émetteur de lumière (34) pour toutes les positions de la torsion maximale autorisée du cadre de levage (11).

2. Chariot de manutention selon la revendication 1, **caractérisé en ce que** l'émetteur de lumière est un laser (37) doté d'un système optique élargissant le faisceau.

3. Chariot de manutention selon la revendication 1 ou 2, **caractérisé en ce que** l'émetteur de lumière (34) est un élément lumineux semi-conducteur, notamment une DEL.

4. Chariot de manutention selon l'une quelconque des revendications 1 à 3, **caractérisé en ce que** le système optique formant le faisceau est formé d'une lentille de dispersion élargissant le faisceau.

5. Chariot de manutention selon l'une quelconque des revendications 1 à 4, **caractérisé en ce que** le système optique formant le faisceau forme un faisceau lumineux (36) élargi en forme de cône.

6. Chariot de manutention selon l'une quelconque des revendications 1 à 5, **caractérisé en ce que** l'élément d'orientation (40) est simultanément à l'émetteur de lumière (34).

7. Chariot de manutention selon l'une quelconque des revendications 1 à 6, **caractérisé en ce que** l'élément cible (41) est une cible réfléchissante (18).

8. Chariot de manutention selon la revendication 6 et 7, **caractérisé en ce que** dans le tronçon de mesure, la cible réfléchissante (18) est disposée au niveau d'une partie du cadre de levage (11) se déplaçant, au cours d'un mouvement de levage, par rapport à l'émetteur de lumière (34) et/ou à l'élément de réception (35) ou au niveau du moyen de réception de charge (13) par rapport à l'émetteur de lumière (34) et/ou à l'élément de réception (35).

9. Chariot de manutention selon la revendication 8, **caractérisé en ce que** l'émetteur de lumière (34) est disposé en bas au niveau du cadre de levage (11) et/ou au niveau du chariot de manutention (2) et que la cible réfléchissante (18) est soulevée avec la partie mobile du cadre de levage (11) ou avec le moyen de réception de charge (13).

10. Chariot de manutention selon l'une quelconque des revendications 7 à 9, **caractérisé en ce que** la cible réfléchissante (18) présente des propriétés de réflexion optique s'écartant significativement des autres zones du cadre de levage (11) ou du moyen de réception de charge (13) percutées par le faisceau lumineux (36) élargi, notamment un très haut coefficient de réflexion des longueurs d'onde de la lumière du faisceau lumineux (36) élargi.

11. Chariot de manutention selon l'une quelconque des revendications 7 à 10, **caractérisé en ce que** la cible réfléchissante (18) est une surface rétroréfléchissante (39).

12. Chariot de manutention selon l'une quelconque des revendications 7 à 11, **caractérisé en ce que** la cible réfléchissante est formée par focalisation.

13. Chariot de manutention selon l'une quelconque des revendications 1 à 12, **caractérisé en ce qu'**un dispositif de nettoyage du système optique et/ou de l'élément de réception (35) est prévu, notamment un dispositif de nettoyage doté d'un jet d'eau et/ou d'air comprimé et/ou d'un essuie-glace et/ou d'un dispositif de brossage.

14. Chariot de manutention selon l'une quelconque des revendications 1 à 13, **caractérisé en ce qu'**une surface du système optique formant le faisceau et/ou de l'élément de réception (35) présente un effet lotus.

15. Chariot de manutention selon la revendication 14, **caractérisé en ce que** la surface est inclinée par rapport à l'horizontale.

16. Chariot de manutention selon l'une quelconque des revendications 1 à 15, **caractérisé en ce que** le système optique formant le faisceau et/ou l'élément de réception (35) et/ou l'élément cible comportent un chauffage.

17. Chariot de manutention selon l'une quelconque des revendications 1 à 16, **caractérisé en ce qu'**une distance par rapport à une surface de trajectoire de roulement peut être déterminée par un détecteur de référence supplémentaire, notamment un détecteur de distance laser.

18. Chariot de manutention selon l'une quelconque des revendications 1 à 17, **caractérisé en ce qu'**une hauteur de levage peut être entrée comme valeur de référence par le biais d'un dispositif de saisie.

19. Chariot de manutention selon l'une quelconque des revendications 1 à 18, **caractérisé en ce qu'**un contact au sol du moyen de réception de charge (13) peut être détecté par un moyen de détection et qu'une valeur de référence peut être déterminée à travers lui pour la hauteur de levage.

20. Chariot de manutention selon l'une quelconque des revendications 1 à 19, **caractérisé en ce que** l'émetteur de lumière (34) et/ou l'élément d'orientation (40) peuvent être fixés au cadre de levage (11) de façon à pouvoir régler son orientation.

21. Procédé de détection de la hauteur de levage dans un chariot de manutention selon l'une quelconque des revendications précédentes.

22. Procédé selon la revendication 21, **caractérisé en ce que** pour contrôler les valeurs de la hauteur de levage, on effectue un contrôle de plausibilité en réalisant un contrôle des valeurs non admises pour la hauteur de levage et/ou des sauts de variation de la hauteur de levage et/ou du parallélisme d'un changement de hauteur de levage envoyé à un signal de commande de hauteur de levage à l'intérieur d'une plage de valeurs admise.

23. Procédé selon la revendication 21 ou 22, **caractérisé en ce que** pour contrôler les valeurs de la hauteur de levage, on effectue un contrôle de plausibilité en comparant des plages de valeur prédéfinies, dépendant de la hauteur de levage, de l'intensité du signal reçu dans l'élément de réception (35), notamment d'un signal réfléchi au niveau d'une cible réfléchissante (18), avec la hauteur de levage détectée.

24. Procédé selon l'une quelconque des revendications 21 à 23, **caractérisé en ce que** pendant un laps de temps de détection déterminé, les valeurs minimales observées de la hauteur de levage servent de valeur de référence nulle pour la hauteur de levage.

25. Procédé selon l'une quelconque des revendications 21 à 24, **caractérisé en ce que** la variation d'intensité du signal reçu dans l'élément de réception (35), notamment d'un signal réfléchi au niveau d'une cible réfléchissante (18), est surveillée pendant une courbe de temps et qu'en cas de passage en dessous de valeurs seuils, un encrassement du système de mesure de hauteur de levage est détecté.

26. Procédé selon la revendication 25, **caractérisé en ce que** les valeurs seuils dépendent de la hauteur de levage.
